# EUROPEAN PATENT APPLICATION

(11) **EP 4 546 919 A1**
(43) Date of publication of application: **30.04.2025**
(21) Application number: 23858526.9
(22) Date of filing: 19.01.2023
(51) Int. Cl.: H04W 72/04

(54) **ULTRA-WIDEBAND FRAME SENDING METHOD AND COMMUNICATION DEVICE**

(30) Priority: 31.08.2022 CN 202211055970
(71) Applicant: Huawei Technologies Co., Ltd., Shenzhen, Guangdong 518129 (CN)
(72) Inventor: HU, Shichang, Shenzhen, Guangdong 518129 (CN); YU, Qian, Shenzhen, Guangdong 518129 (CN); MA, Chao, Shenzhen, Guangdong 518129 (CN)
(74) Representative: Maiwald GmbH
(86) International application number: PCT/CN2023/073140
(87) International publication number: WO 2024/045483

(57) **Abstract**

Embodiments of this application relate to the field of communication technologies, and provide an ultra-wideband frame sending method and a communication device, to improve a security protection capability in UWB sending and receiving processes. A specific solution is as follows: A communication device obtains key information of an ultra-wideband frame, where the ultra-wideband frame includes a plurality of data fragments. The communication device sends the plurality of data fragments based on one or more gaps between the plurality of data fragments, or the communication device receives the plurality of data fragments based on one or more gaps between the plurality of data fragments, where the gaps between the plurality of data fragments are determined based on the key information. Embodiments of this application are used in a process of sending the ultra-wideband frame by the communication device.

## Description

This application claims priority to Chinese Patent Application No. 202211055970.2, filed with the China National Intellectual Property Administration on August 31, 2022 and entitled "ULTRA-WIDEBAND FRAME SENDING METHOD AND COMMUNICATION DEVICE", which is incorporated herein by reference in its entirety.

### TECHNICAL FIELD

Embodiments of this application relate to the field of communication technologies, and in particular, to an ultra-wideband frame sending method and a communication device.

### BACKGROUND

An ultra-wideband (ultra-wideband, UWB) wireless technology is featured with a very narrow pulse signal, and a good multipath resolution capability to ensure centimeter-level ranging precision in a complex indoor multipath environment. However, in the UWB wireless technology, an ultra-wideband chip has a large area, and high power consumption and costs.

In a current solution, a narrowband (Narrowband, NB) signal is used for data transmission, and an NB provides time synchronization information for a UWB signal. A UWB only needs to send a channel impulse response (Channel Impulse Response, CIR) training sequence for ranging. In this solution, the CIR training sequence of the UWB is divided into a plurality of fragments for sending, to increase a link budget (link budget) of the UWBand improve pulse transmit power in the UWB. In other words, when power spectral density remains unchanged, a coverage range of the UWB signal can be increased.

However, because security protection is an important technology for implementing a secure ranging application, and the current solution does not provide a security protection measure for the CIR training sequence, a security protection capability of a fragment in the CIR training sequence is poor.

### SUMMARY

Embodiments of this application provide an ultra-wideband frame sending method and a communication device, to improve a security protection capability in UWB sending and receiving processes.

To achieve the foregoing objective, the following technical solutions are used in embodiments of this application.

According to a first aspect, an ultra-wideband frame sending method is provided. The method includes: A communication device obtains key information of an ultra-wideband frame, where the ultra-wideband frame includes a plurality of data fragments. The communication device sends the plurality of data fragments based on one or more gaps between the plurality of data fragments, or the communication device receives the plurality of data fragments based on one or more gaps between the plurality of data fragments, where the gaps between the plurality of data fragments are determined based on the key information.

In other words, in a process of sending the ultra-wideband frame, the communication device in this application may encrypt the gaps between the data fragments in the ultra-wideband frame by using the key information and then send encrypted ultra-wideband frame. Correspondingly, in a process of receiving the ultra-wideband frame, the communication device may determine the gaps between the data fragments by using the key information, and receive the ultra-wideband frame based on the gaps.

In this embodiment of this application, a physical-layer implementation cost does not need to be increased, and security protection in a time dimension can be provided for the ultra-wideband frame. The gaps between the data fragments in the ultra-wideband frame are set through integrated encryption. This can ensure secure sending and receiving of the ultra-wideband frame.

In a possible design, the plurality of data fragments are used for ranging. In this way, in a process of using the ultra-wideband frame for ranging, the gaps between the plurality of data fragments in the ultra-wideband frame are encrypted by using the key information. This can improve a security protection capability in the process of using the ultra-wideband frame for ranging.

In a possible design, the key information is a symmetric key between a communication device sending the ultra-wideband frame and a communication device receiving the ultra-wideband frame.

Before the communication device sends the plurality of data fragments based on the gaps between the plurality of data fragments, or receives the plurality of data fragments based on the gaps between the plurality of data fragments, the method further includes: The communication device generates a random number based on the symmetric key, and determines the gaps between the plurality of data fragments based on the random number.

In this application, the gaps between the plurality of data fragments in the ultra-wideband frame are encrypted by using the symmetric key of a transmitting side and a receiving side of the ultra-wideband frame, so that the transmitting side and the receiving side can control sending and receiving of the ultra-wideband frame based on a same gap. On the transmitting side and the receiving side, the random number is determined based on the symmetric key, and the gaps that are between the plurality of data fragments and that are determined based on the random number are the same.

In a possible design, the gaps between the plurality of data fragments are the same. A value of the gaps between the plurality of data fragments is the random number, or a value of the gaps between the plurality of data fragments is obtained through calculation performed based on the random number.

In other words, the random number is determined by using the symmetric key, and the value of the gaps that is determined based on the random number are the same. The gaps between the plurality of data fragments may be determined based on the value of the gaps.

In a possible design, the gaps between the plurality of data fragments are not exactly the same.

That the communication device generates a random number based on the key information, and determines the gaps between the plurality of data fragments based on the random number includes: The communication device generates a plurality of random numbers based on the symmetric key, and sets the plurality of random numbers as the gaps between the plurality of data fragments; or the communication device generates a plurality of random numbers based on the symmetric key, and performs calculation based on the plurality of random numbers, to obtain the gaps between the plurality of data fragments.

It is assumed that the communication device is a sending device. The sending device may set, based on the symmetric key, the gaps that are not exactly the same and that are between the plurality of data fragments in the ultra-wideband frame, to send the plurality of data fragments based on the gaps. Therefore, security can be ensured when the sending device sends the ultra-wideband frame. It is assumed that the communication device is a receiving device. The receiving device may also determine, based on the symmetric key, the gaps that are not exactly the same and that are between the plurality of data fragments in the ultra-wideband frame, to receive the plurality of data fragments based on the gaps. Therefore, it can be ensured that the receiving side correctly receives the plurality of data fragments in the ultra-wideband frame.

In a possible design, the gaps between the plurality of data fragments are not exactly the same.

That the communication device generates a random number based on the symmetric key, and determines the gaps between the plurality of data fragments based on the random number includes: The communication device generates a first random number based on the symmetric key, where the first random number is one of a plurality of random numbers, and the plurality of random numbers correspond to a plurality of gap modes; and the communication device obtains a first gap mode corresponding to the first random number, where the first gap mode indicates the gaps between the plurality of data fragments.

In this design, it is equivalent that the plurality of gap modes are preset, and each gap mode indicates the gaps between the plurality of data fragments. If the first random number generated by the communication device based on the symmetric key is determined, the first gap mode corresponding to the first random number is determined. The transmitting side and the receiving side share the same determined first gap mode. In this way, security of the ultra-wideband frame is ensured in sending and receiving processes.

In a possible design, the ultra-wideband frame includes a synchronization field and a channel impulse response training sequence CTS field, and the CTS field includes the plurality of data fragments. The synchronization field is used to perform time-frequency synchronization between a ranging device sending the ultra-wideband frame and a ranging device receiving the ultra-wideband frame, and the CTS field is used to obtain a ranging result.

In a possible design, the plurality of data fragments are obtained by dividing a plurality of preamble symbols.

The plurality of preamble symbols are generated based on a synchronization sequence and a spreading sequence. The synchronization sequence includes a plurality of synchronization codes, the spreading sequence includes a plurality of spreading codes, and the plurality of spreading codes are in a one-to-one correspondence with the plurality of preamble symbols.

In a possible design, a single preamble symbol in the plurality of preamble symbols is generated based on the synchronization sequence and a spreading code corresponding to the single preamble symbol.

According to a second aspect, a communication device is provided. The communication device includes: an obtaining unit, configured to obtain key information of an ultra-wideband frame, where the ultra-wideband frame includes a plurality of data fragments; and a transceiver unit, configured to send the plurality of data fragments based on one or more gaps between the plurality of data fragments, or receive the plurality of data fragments based on one or more gaps between the plurality of data fragments, where the gaps between the plurality of data fragments is determined based on the key information.

For beneficial effects of the second aspect, refer to the descriptions of the first aspect. Details are not described in the second aspect again.

In a possible design, the plurality of data fragments are used for ranging.

In a possible design, the key information is a symmetric key between a communication device sending the ultra-wideband frame and a communication device receiving the ultra-wideband frame. The obtaining unit is further configured to: generate a random number based on the symmetric key, and determine the gaps between the plurality of data fragments based on the random number.

In a possible design, the gaps between the plurality of data fragments are the same.

A value of the gaps between the plurality of data fragments is the random number, or a value of the gaps between the plurality of data fragments is obtained through calculation performed based on the random number.

In a possible design, the gaps between the plurality of data fragments are not exactly the same.

The obtaining unit is configured to: generate a plurality of random numbers based on the symmetric key, and set the plurality of random numbers as the gaps between the plurality of data fragments; or generate a plurality of random numbers based on the symmetric key, and perform calculation based on the plurality of random numbers, to obtain the gaps between the plurality of data fragments.

In a possible design, the gaps between the plurality of data fragments are not exactly the same.

The obtaining unit is configured to: generate a first random number based on the symmetric key, where the first random number is one of a plurality of random numbers, and the plurality of random numbers correspond to a plurality of gap modes; and the communication device obtains a first gap mode corresponding to the first random number, where the first gap mode indicates the gaps between the plurality of data fragments.

According to a third aspect, a communication apparatus is provided. The communication apparatus includes at least one processor, the at least one processor is connected to a memory, and the at least one processor is configured to read and execute a program stored in the memory, to enable the apparatus to perform the method according to any one of the first aspect or the possible implementations of the first aspect.

According to a fourth aspect, a chip is provided. The chip is coupled to a memory, and is configured to read and execute program instructions stored in the memory, to implement the method according to any one of the first aspect or the possible implementations of the first aspect.

According to a fifth aspect, a ranging device is provided. The ranging device includes a memory and a processor. The memory is coupled to the processor. The memory is configured to store computer program code, and the computer program code includes computer instructions. A transceiver is configured to receive data and send data. When the processor executes the computer instructions, the ranging device is enabled to perform a scenario-based ultra-wideband frame sending method according to any one of the first aspect or the corresponding possible designs of the first aspect.

According to a sixth aspect, an embodiment of this application provides a ranging apparatus. The apparatus is included in an electronic device, and the apparatus has a function of implementing actions of the communication device in any one of the foregoing aspects and any one of the possible implementations. The function may be implemented by hardware, or may be implemented by hardware executing corresponding software. The hardware or the software includes one or more modules or units corresponding to the foregoing function, for example, an obtaining module or unit, a transceiver module or unit, or the like.

According to a seventh aspect, an embodiment of this application provides an electronic device, including an antenna, one or more processors, and one or more memories. The one or more memories are coupled to the one or more processors. The one or more memories are configured to store computer program code, and the computer program code includes computer instructions. When the one or more processors execute the computer instructions, the electronic device is enabled to perform the ultra-wideband frame sending method according to any one of the first aspect and the possible implementations of the first aspect.

According to an eighth aspect, an embodiment of this application provides a computer-readable storage medium, including computer instructions. When the computer instructions are run on an electronic device, the electronic device is enabled to perform the ultra-wideband frame sending method according to any one of the first aspect and the possible implementations of the first aspect.

According to a ninth aspect, an embodiment of this application provides a computer program product. When the computer program product runs on a computer or a processor, the computer or the processor is enabled to perform the ultra-wideband frame sending method according to any one of the first aspect and the possible implementations of the first aspect.

According to a tenth aspect, an embodiment of this application provides a communication system. The system may include the communication device configured to send an ultra-wideband frame and the communication device configured to receive an ultra-wideband frame according to any one of the possible implementations of the foregoing aspects. The communication device may perform the ultra-wideband frame sending method according to any one of the first aspect and the possible implementations of the first aspect.

It may be understood that any one of the communication apparatus, communication device, ranging device, chip, computer-readable storage medium, computer program product, or the like provided above may be used in the corresponding method provided above. Therefore, for beneficial effects that can be achieved, refer to the beneficial effects in the corresponding method. Details are not described herein again.

These aspects or other aspects in this application are more concise and comprehensible in the following descriptions.

### BRIEF DESCRIPTION OF DRAWINGS

FIG. 1 is a schematic diagram of a data structure in which an STS field is added to a UWB data packet for security protection according to an embodiment of this application;
FIG. 2 is a schematic structural diagram of data sending of ranging data according to an embodiment of this application;
FIG. 3 is a schematic diagram of a network framework of an ultra-wideband frame sending method according to an embodiment of this application;
FIG. 4 is a schematic flowchart of an ultra-wideband frame sending method according to an embodiment of this application;
FIG. 5 is a schematic diagram of a structure of an ultra-wideband frame according to an embodiment of this application;
FIG. 6 is a schematic flowchart of an ultra-wideband frame sending method according to an embodiment of this application;
FIG. 7 is a schematic diagram of a structure of an ultra-wideband frame according to an embodiment of this application;
FIG. 8 is a schematic diagram of a structure of an ultra-wideband frame according to an embodiment of this application;
FIG. 9 is a schematic diagram of a structure of an ultra-wideband frame according to an embodiment of this application;
FIG. 10 is a schematic composition diagram of a plurality of preamble symbols according to an embodiment of this application;
FIG. 11 is a schematic diagram of division of Ncts preamble symbols according to an embodiment of this application;
FIG. 12 is a schematic diagram of a structure of a communication device according to an embodiment of this application; and
FIG. 13 is a schematic diagram of a structure of a ranging device according to an embodiment of this application.

### DESCRIPTION OF EMBODIMENTS

For ease of understanding, example descriptions of some concepts related to embodiments of this application are provided for reference. Details are shown as follows:
UWB: UWB is also referred to as ultra-wideband, and can use a pulse with an extremely short gap (for example, less than 1 ns) for communication. In this application, the UWB may be impulse radio (Impulse Radio, IR)-UWB, can transmit data by using a narrow pulse signal at a nanosecond level, and may be used in a scenario such as high-precision positioning.

NB: NB is also referred to as narrowband, and has advantages such as strong connection, high coverage, low power consumption, and low costs. A type of the NB is not limited in this application. For example, the NB may be a narrowband technology in a short-range wireless technology, such as a Bluetooth technology, a Wi-Fi technology, or Zigbee.

CIR: CIR refers to channel impulse response, which can be used to extract physical channel information.

The following describes the technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

With arrival of an internet of everything era, the UWB is widely used in daily life. Compared with other commercial wireless technologies, such as Wi-Fi and Bluetooth, an IR-UWB (which is referred to as UWB for short below) wireless technology has features such as a very narrow pulse signal, for example, at an ns level, and a good multipath resolution capability.

However, compared with a narrowband NB system, one of disadvantages of the UWB wireless technology is high power consumption and costs. One reason is that the UWB implements data transmission and ranging at the same time, and efficiency of the UWB for data transmission and communication is low. Another reason is that due to large wideband of the UWB, hardware needs to work at a very high signal sampling rate, for example, at a GHz level. In other words, a clock of a UWB chip needs to work at a very high frequency. Consequently, the UWB chip has a large area, high power consumption, and high costs. To make the UWB wireless technology more attractive, it is necessary to reduce the area, the power consumption, and the costs of the UWB chip.

In addition, another problem of the UWB is a limited coverage range. Transmit power of the UWB cannot exceed -41.3 dBm/MHz based on a power spectral density (Power Spectral Density, PSD) requirement specified in UWB frequency band usage regulations. In addition, a working frequency band of UWB ranging is usually 6 to 9 GHz, and signal attenuation in the frequency band is large. All these factors lead to a limited coverage capability of the UWB ranging.

Currently, in a technology, a commonly used UWB ranging protocol is the high rate pulse repetition frequency (high rate pulse repetition frequency, HPR) UWB protocol of the institute of electrical and electronics engineers (Institute of Electrical and Electronics Engineers, IEEE) 802.15a/z. A signal format defined in the protocol supports data transmission and ranging functions. In addition, to increase a security protection capability, a long fragment of security token service (Security Token Service, STS) data is added to a transmitted signal for security protection.

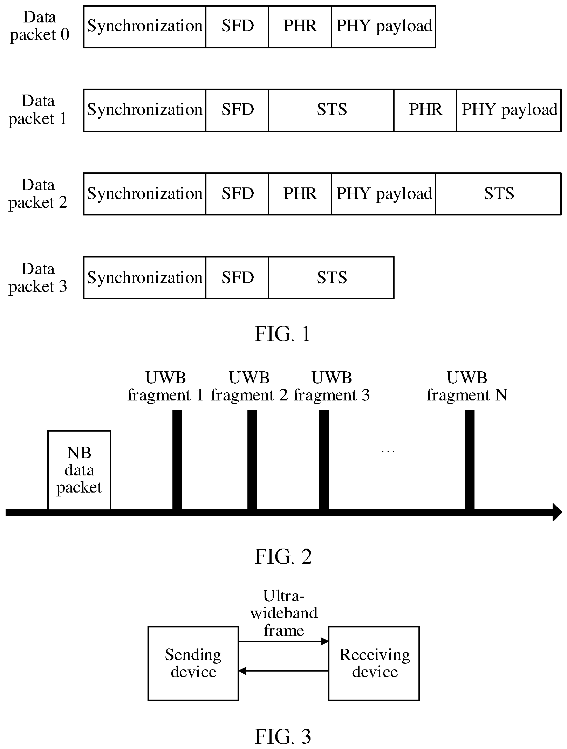

For example, FIG. 1 is a schematic diagram of a data structure in which an STS field is added to a UWB data packet for security protection. FIG. 1 shows structures of four UWB data packets. Each data includes a synchronization (Sync) field and a start-of-frame delimiter (start-of-frame delimiter, SFD) field. Some data packets further include a physical information header (PHY header, PHR) field and a physical layer payload (PHY payload) field. Three data packets thereof each includes an STS field.

In this protocol, the UWB is complex, transmission duration on the air is long, power consumption and costs of a UWB system are high, and overall ranging efficiency is low. In addition, mean PRF of UWB signal transmission is also high due to support for a high data transmission rate. The mean PRF may be understood as frequency of pulse transmission, namely, an average quantity of pulses sent in a unit time. The PRF is pulse repetition frequency (Pulse repetition frequency).

In another technology, NB may be used for data transmission, and time synchronization information is provided for the UWB via the NB. The UWB may be only used to send a CIR training sequence for ranging. For example, FIG. 2 shows a data sending structure of ranging data. A ranging device first transmits an NB data packet, and then transmits a CIR training sequence. The CIR training sequence includes N UWB frags (fragments).

In other words, in this technology, the CIR training sequence of the UWB is divided into a plurality of fragments for sending, to increase a link budget of a system and increase a coverage range. However, this technology is not related to a security protection measure of the CIR training sequence.

Therefore, embodiments of this application provide an ultra-wideband frame sending method, mainly for how to provide security protection for an ultra-wideband frame in a time dimension by using an architecture of a fragment in a training sequence in ultra-wideband frame sending and receiving processes. This can implement security protection for the ultra-wideband frame.

FIG. 3 is a schematic diagram of a network framework of an ultra-wideband frame sending method according to this application. The ultra-wideband frame sending method provided in this application may be applied to a communication device. In a network architecture of a specific application, the communication device may be a sending device or a receiving device.

For example, in a scenario of using an ultra-wideband frame for ranging, the sending device may send a ranging request to the receiving device. The receiving device returns a ranging response to the sending device. In embodiments of this application, the ranging request may be the ultra-wideband frame (ultra-wideband ranging frame) in this application. The ultra-wideband frame includes a plurality of data fragments, and the plurality of data fragments are used for ranging. In the plurality of data fragments, a gap between adjacent data fragments is determined based on key information between the sending device and the receiving device. In this way, security protection for the ultra-wideband frame or the ultra-wideband ranging frame in a time dimension can be provided in an architecture of the data fragment.

In some embodiments, in a ranging scenario, the ultra-wideband frame sending method in embodiments of this application may support one-to-one, one-to-many, and many-to-many ranging. This may be flexibly determined based on networking. The one-to-one may be understood as one sending device corresponding to one receiving device, the one-to-many may be understood as one sending device corresponding to a plurality of receiving devices, and the many-to-many may be understood as a plurality of sending devices corresponding to a plurality of receiving devices.

In some embodiments, the ultra-wideband frame sending method in embodiments of this application may be applied to a person or material positioning technology in indoor space. A feature of this ranging/determining positioning technology is that a range of positioning precision can be within one meter.

For example, the UWB ranging/positioning technology can perform real-time precise positioning on a person, and integrates functions such as risk control, video linkage, historical trajectory playback, personnel management, an electronic fence, behavior monitoring, emergency rescue, and the like.

For example, in some embodiments, in a ranging scenario, when the sending device is a positioning end, and the receiving device is a positioned end, the positioning end may generally be an access point (Access Point, AP), and the positioned end may generally be a tag. The tag can be understood as a signal source of a wireless positioning system produced by a vendor. The tag is usually placed or pasted on an object that needs to be ranged or positioned. As a source device that needs to be positioned, the tag may periodically send a radio frequency signal to surroundings.

The foregoing network architecture is used, and the following describes a method embodiment of this application.

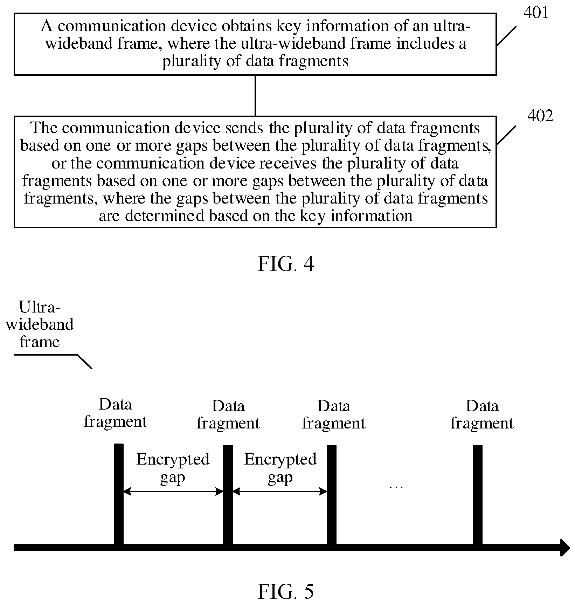

This application provides an ultra-wideband frame sending method. As shown in FIG. 4, a procedure of the method includes the following steps.

401: A communication device obtains key information of an ultra-wideband frame, where the ultra-wideband frame includes a plurality of data fragments.

The communication device may be a sending device, for example, may be a device that sends an ultra-wideband frame used for ranging. The ranging device may alternatively be a receiving device, for example, may be a device that receives the ultra-wideband frame used for ranging. In a ranging scenario, the receiving device may obtain a ranging result between the sending device and the receiving device based on the ultra-wideband frame.

The ultra-wideband frame in this embodiment of this application is a UWB frame. The plurality of data fragments in the UWB frame are equivalent to a CIR training sequence (training sequence), which may be referred to as CTS for short. A single data fragment in the plurality of data fragments may be understood as a sequence member in the CTS.

In some embodiments, the key information may be a symmetric key between the sending device and the receiving device.

402: The communication device sends the plurality of data fragments based on one or more gaps between the plurality of data fragments, or the communication device receives the plurality of data fragments based on one or more gaps between the plurality of data fragments, where the gaps between the plurality of data fragments are determined based on the key information.

In some embodiments, both the sending device and the receiving device may obtain the gaps between the plurality of data fragments based on the symmetric key. The sending device may send the plurality of data fragments to the receiving device based on the gaps between the plurality of data fragments, or the receiving device may receive the plurality of data fragments from the sending device based on the gaps between the plurality of data fragments.

FIG. 5 is a schematic diagram of a structure of an ultra-wideband frame. In other words, when being sent, the ultra-wideband frame includes a plurality of data fragments, and a gap (gap) whose duration is encrypted exists between adjacent data fragments. A plurality of gaps in the ultra-wideband frame may be the same, or may be not exactly the same. Details are described below.

Therefore, in a transmission process of the ultra-wideband frame, a physical-layer implementation cost does not need to be increased, and security protection in a time dimension can be provided for the ultra-wideband frame in embodiments of this application. This is equivalent to encrypting the gaps between the plurality of data fragments in the ultra-wideband frame by using key information. In other words, duration of the gaps is set through integrated encryption, to ensure a security protection capability of the ultra-wideband frame.

The following describes an ultra-wideband frame sending procedure when the foregoing communication device is used in the ranging scenario. Based on the procedure of the method shown in FIG. 4, the following further describes embodiments of this application.

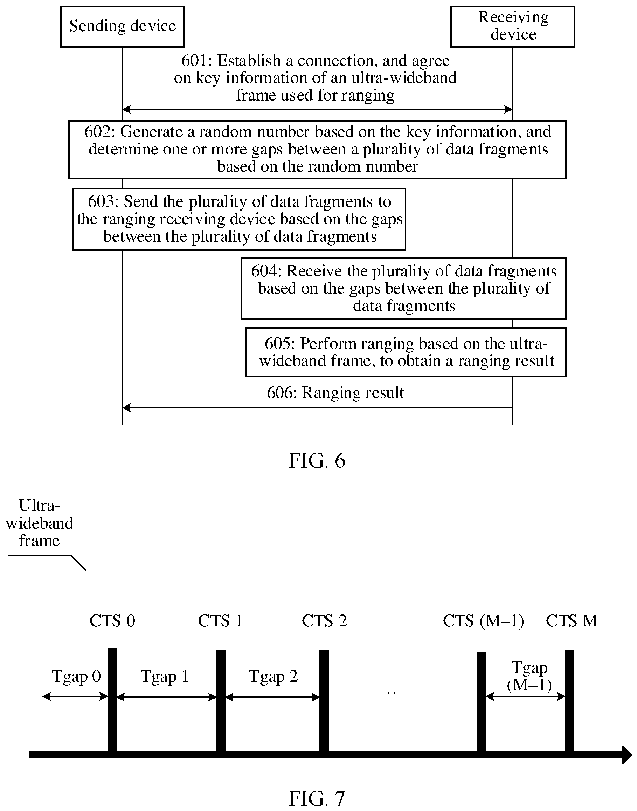

This application provides an ultra-wide frame sending method. As shown in FIG. 6, a procedure of the method includes the following steps.

601: Establish a connection between a sending device and a receiving device, and agree on key information of an ultra-wideband frame used for ranging.

The sending device in this application may be understood as a ranging device that sends the ultra-wideband frame, and the receiving device may be understood as a ranging device that receives the ultra-wideband frame.

In some embodiments, the sending device may be a positioning end, and the receiving device may be a positioned end.

For example, the sending device may send a broadcast message to the receiving device. The broadcast message carries parameters, such as address information of the sending device and the receiving device, clock information, an indication indicating whether to perform encryption, an indication indicating whether to perform ranging, and an indication indicating a method used for ranging/positioning. After receiving the broadcast message, the receiving device may send a connection complete message to the sending device, and the establishment of the connection between the sending device and the receiving device is completed.

Then, the sending device and the receiving device may perform a key agreement procedure to obtain the key information. The key information is used to encrypt the ultra-wideband frame when the ultra-wideband frame is sent.

In some embodiments, the key information may be a symmetric key. The symmetric key may be understood as that a data transmitter and a data receiver use a same key to encrypt and decrypt plaintext.

To be specific, in this application, a key used by the sending device to encrypt the ultra-wideband frame is the same as a key used by the receiving device to decrypt the ultra-wideband frame. The key information in this application is the symmetric key between the ranging device that sends the ultra-wideband frame and the ranging device that receives the ultra-wideband frame.

In this application, the symmetric key is considered to be used to encrypt one or more gaps between the plurality of data fragments. This is because the sending device and the receiving device need to control sending and receiving based on a same gap. A specific encryption manner is described below.

602: The sending device and the receiving device generate a random number based on the key information, and determine the gaps between the plurality of data fragments based on the random number.

As described in the step 601, the key information is the symmetric key. It is considered that, when the sending device and the receiving device generate the gaps by using the same key information, the sending device uses the gaps generated by using the key information and a same random number algorithm to control sending of the plurality of data fragments. The receiving device uses the same key information and the same random number algorithm to generate the same gap, so that the receiving device can correctly control receiving and calculation of the plurality of data fragments. In this way, the receiving device can correctly control a correlation accumulator of the plurality of fragments to calculate a valid CIR.

The correlation accumulator may be understood as an implementation algorithm for processing the ultra-wideband frame by the receiving device. The valid CIR may be understood as a valid CIR training sequence (namely, each data fragment). In other words, a gap fragment may not be involved in accumulation (where there is no signal, and the receiving device has only noise).

It may be understood that, in this embodiment of this application, the ultra-wideband frame is encrypted in a time dimension, and when the CIR training sequence is also encrypted, security protection for the ultra-wideband frame can be implemented in two dimensions.

In some embodiments, as shown in FIG. 7, it is assumed that the ultra-wideband frame includes M+1 data fragments, where the M+1 data fragments are numbered from CTS 0 to CTS M. The ultra-wideband frame further includes M gaps, where the M gaps are numbered from Tgap 0 to Tgap (M-1). For a manner of determining the M gaps, refer to the following manner A, manner B, and manner C.

A unit of the gaps is not limited in this application. For example, ns (nanosecond), µs (microsecond), ms (millisecond), or dozens of ns may be used as one unit (time unit).

Manner A: The gaps between the plurality of data fragments are the same. In other words, values of Tgap 0 to Tgap M-1 are the same.

A value of the gaps between the plurality of data fragments is a random number.

Alternatively, a value of the gaps between the plurality of data fragments is obtained through calculation performed based on the random number.

In other words, in the manner A, the sending device and the receiving device may generate a random number within a specific range by using the symmetric key. The random number may be directly used for setting a length of the gaps between the data fragments. Alternatively, the sending device and the receiving device may further set a length of the gaps between the data fragments based on the value obtained through calculation performed on the random number.

Manner B: The gaps between the plurality of data fragments are not exactly the same. In other words, values of Tgap 0 to Tgap M-1 are not exactly the same.

In the manner B, the ranging device generates a plurality of random numbers based on the symmetric key, and sets the plurality of random numbers as the gaps between the plurality of data fragments.

For example, there are M random numbers. Values of the M random numbers are different. The values of the M random numbers may be directly used for setting the M gaps from Tgap 0 to Tgap M-1 respectively.

Alternatively, the ranging device generates a plurality of random numbers based on the symmetric key, and performs calculation based on the plurality of random numbers, to obtain the gaps between the plurality of data fragments.

For example, there are M random numbers. Values of the M random numbers are not exactly the same. The sending device and the receiving device may further perform calculation based on the M random numbers, to obtain M calculated values. The M calculated values are respectively used for setting the M gaps from Tgap 0 to Tgap M-1.

Manner C: The gaps between the plurality of data fragments are not exactly the same. In other words, values of Tgap 0 to Tgap M-1 are not exactly the same.

In the manner C, the M gaps from Tgap 0 to T gap M-1 are optional based on a plurality of preset support modes, and the plurality of support modes are in a one-to-one correspondence with a plurality of sequence numbers. When the sending device and the receiving device may generate a same random number algorithm based on the symmetric key, the sending device and the receiving device generates a same first random number based on the symmetric key, and the first random number may be understood as a sequence number. In this way, a support mode may be selected based on a determined sequence number, and corresponding M gaps from Tgap 0 to Tgap M-1 in the support mode are determined.

In other words, the sending device and the receiving device may generate the first random number based on the symmetric key. The first random number is one of a plurality of random numbers, and the plurality of random numbers correspond to a plurality of gap modes. The sending device and the receiving device may obtain a first gap mode (support mode) corresponding to the first random number, where the first gap mode indicates the gaps between the plurality of data fragments.

For example, 16 support modes of Tgap 0 to Tgap M-1 are preset in the sending device and the receiving device. The 16 support modes of Tgap 0 to Tgap M-1 respectively correspond to sequence numbers 0 to 15. When a value of the first random number is 7, a support mode corresponding to a sequence number 7 is optional. Alternatively, a value obtained by adding 1 to a value of an optional first random number is an optional sequence number, namely, a support mode corresponding to a sequence number 8.

Certainly, this application is not limited to the implementations corresponding to the manner A, manner B, and manner C, and another implementation may also be used.

In some embodiments, a manner of generating the random number based on the symmetric key is not limited in this application.

For example, in this application, an advanced encryption standard (Advanced Encryption Standard, AES) may be used to generate a random number based on the symmetric key. For example, when AES-128 is used, 128 random bits (bits) may be generated based on the symmetric key, and the 128 random bits correspond to a random number range from 0 to 2¹²⁸-1. According to a random number extraction rule, the sending device and the receiving device may determine, from the random number range from 0 to 2¹²⁸-1, a random number needed for determining the gaps in this application. For example, the random number range from 0 to 2¹²⁸-1 corresponds to a gap range from (0 to 2¹²⁸-1) µs. According to the rule, one random number may be extracted from the random number range from 0 to 2¹²⁸-1, and the random number is used for setting the gaps between the plurality of data fragments, where the gaps of the plurality of data fragments are the same. Alternatively, a plurality of random numbers are extracted according to the rule, and the plurality of random numbers are used to set the gaps between the plurality of data fragments, where the gaps between the plurality of data fragments are not exactly the same.

Alternatively, in some embodiments, when the gaps between the plurality of data fragments are not exactly the same, because the random number range from 0 to 2¹²⁸-1 obtained by using the AES-128 is large, after being generated based on the symmetric key, the 128 random bits are divided into 16 random bit groups, and per group includes 8 bits. Each random bit group may correspond to 0 to 2⁸, namely, a random number range from 0 to 255. Each random number range from 0 to 255 corresponds to a gap range of (0 to 255) µs. According to a random number extraction rule, the sending device and the receiving device may extract, from the random number range from 0 to 255 in each random bit group, one random number as one gap, so that 16 random numbers may be obtained, to be used as 16 gaps that are not exactly the same. It is assumed that the plurality of data fragments need 16 gaps. The 16 random numbers may be used as the 16 gaps.

603: The sending device sends the plurality of data fragments to the receiving device based on the gaps between the plurality of data fragments.

After determining the gaps between the plurality of data fragments, the sending device may send the ultra-wideband frame to the receiving device. The ultra-wideband frame includes the plurality of data fragments.

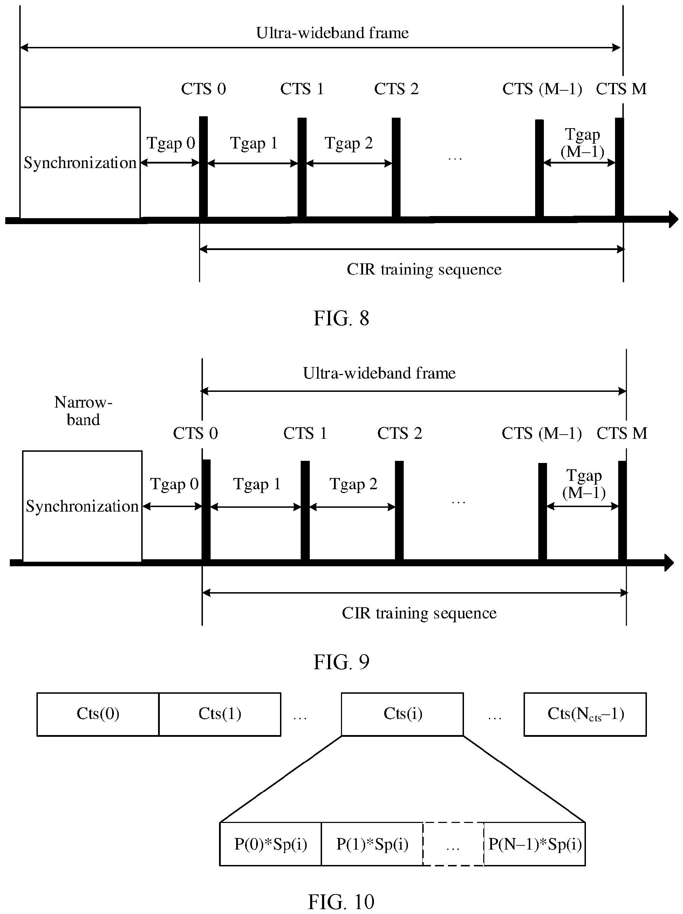

Therefore, in some embodiments, as shown in FIG. 8, the ultra-wideband frame in this application may include a synchronization (Sync) field that is used for time-frequency synchronization and a CTS field. The CTS field includes a CIR training sequence, namely, the plurality of data fragments in this application. The plurality of data fragments are used for CIR calculation and ranging. In this case, an ultra-wideband system can complete time-frequency synchronization and ranging. A structure of an ultra-wideband frame in this case is described below.

Alternatively, in some embodiments, as shown in FIG. 9, a narrowband-assisted ultra-wideband ranging system may be used for ranging. In this case, a narrow-band system is configured to perform time-frequency synchronization between the sending device and the receiving device, and an ultra-wideband system is configured to send the ultra-wideband frame. The ultra-wideband frame includes a CIR training sequence, namely, the plurality of data fragments in this application. The plurality of data fragments are used for CIR calculation and ranging.

604: The receiving device receives the plurality of data fragments based on the gaps between the plurality of data fragments.

605: The receiving device performs ranging based on the ultra-wideband frame, to obtain a ranging result.

In some embodiments, time of flight (time of flight, TOF) may be used for ranging. For example, the ultra-wideband frame sent by the sending device includes sending time Ta1 for sending the ultra-wideband frame. When receiving the ultra-wideband frame, the receiving device may record receiving time Tb1 for receiving the ultra-wideband frame. Then, the receiving device may return a response of the ultra-wideband frame to the sending device, record sending time Tb2 at which the receiving device sends the response of the ultra-wideband frame, and obtain receiving time Ta2 at which the sending device receives the response of the ultra-wideband frame. Therefore, a manner of calculating the ranging result S may be, for example, S=C×[(Ta2-Ta1)-(Tb2-Tb1)]/2, where C is a speed of light.

Certainly, the ranging manner is merely an example herein, and the ranging result may be obtained in another ranging manner.

Time information in the formula for calculating the ranging result S may be understood as time information of a line of sight (line of sight, LOS). The CIR training sequence in this application may be understood as multipath information. The CIR training sequence needs to be further analyzed and processed to obtain location information of the LOS, and then the time information of the time LOS is obtained through calculation further performed based on the location information of the LOS.

606: The receiving device sends the ranging result to the sending device.

Therefore, in this application, when an ultra-wideband is used for ranging between the ranging devices, in this embodiment of this application, the gaps in the plurality of data fragments namely, the CIR training sequence in the ultra-wideband frame may be encrypted by using the key information. In other words, the duration of the gaps are set through integrated encryption. This can implement random security solution to some extent, to ensure final secure ranging of the ultra-wideband.

In addition, in the ultra-wideband frame, a manner in which a signal is sent at time of the plurality of data fragments, and no signal is sent at time of the gaps is used, so that a signal duty cycle (which is a ratio of duration at which the signal is sent to duration of an entire sending cycle) of the entire ultra-wideband frame can be reduced. When a frequency of sending a pulse signal is reduced based on a requirement of ensuring power spectral density, pulse transmit power of a single fragment can be increased.

As described above, this application is applicable to various UWB/IR-UWB communication and ranging systems, and a narrowband-assisted UWB/IR-UWB ranging system.

In a UWB/IR-UWB ranging system without assistance of the narrowband, the ultra-wideband frame in this application includes the synchronization field and the CTS field. The following describes a structure in which the ultra-wideband frame includes the synchronization field and the CTS field.

The CTS field includes the plurality of data fragments, or is referred to as a plurality of CTS fragments. The plurality of CTS fragments form sequence members in the CIR training sequence. A gap exists between the plurality of CTS fragments.

The synchronization field is used to perform time-frequency synchronization between the ranging device sending the ultra-wideband frame and the ranging device receiving the ultra-wideband frame, and the CTS field is used to obtain the ranging result.

In this way, in this application, secure encryption for the gap (gap) and generation of the CIR training sequence may be integrated.

In some embodiments, the CTS field is generated by using a preamble symbol (preamble symbol) having good correlation. In other words, the plurality of data fragments are obtained by dividing a plurality of preamble symbols.

The plurality of preamble symbols are generated based on a synchronization sequence and a spreading sequence. The synchronization sequence includes a plurality of synchronization codes, the spreading sequence includes a plurality of spreading codes, and the plurality of spreading codes are in a one-to-one correspondence with the plurality of preamble symbols.

It may also be understood that the plurality of preamble symbols are generated after spread spectrum is performed on the synchronization sequence.

FIG. 10 is a schematic composition diagram of a plurality of preamble symbols. Cts(0), Cts(1), ..., Cts(i), ..., and Cts(N_{cts}-1) are N_{cts} preamble symbols. Each preamble symbol includes N pieces of data. In other words, the N pieces of data included in one preamble symbol Cts(i) shown in FIG. 10 are: P(0)*Sp(i), P(1)*Sp(i), ..., and P(N-1)*Sp(i).

P(0), P(1), ..., and P(N-1) are an identifier of a synchronization sequence corresponding to one preamble symbol, and a spreading sequence is N Sp(i)s corresponding to the synchronization sequence.

Equivalently, a single preamble symbol Cts(i) in the plurality of preamble symbols is generated by using the synchronization sequence and a spreading code Sp(i) corresponding to the single preamble symbol. For the single preamble symbol Cts(i), the foregoing spreading operation is that the single preamble symbol Cts(i) is generated by multiplying the spreading code Sp(i) by each sequence member in the corresponding synchronization sequence P(0), P(1), ..., and P(N-1).

Synchronization sequences corresponding to different preamble symbols may be the same or different.

In some embodiments, a length of the CIR training sequence is configurable. The synchronization sequence may be formed by selecting a synchronization code having good correlation. A specific synchronization code is not limited in this application.

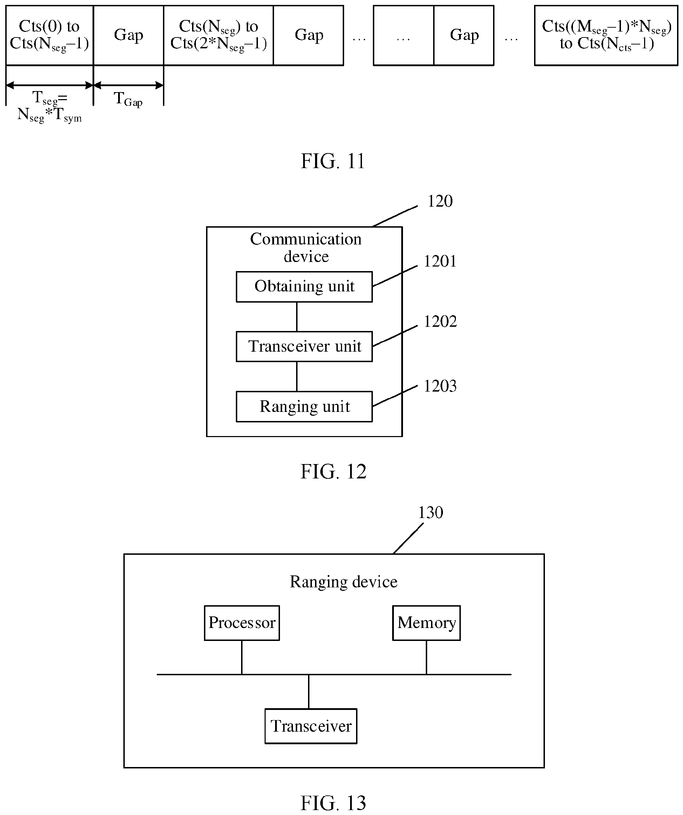

On the basis of FIG. 10, in this application, the N_{cts} preamble symbols may be divided, and a gap (gap) is set between adjacent preamble symbols. For example, FIG. 11 is a schematic diagram of division of N_{cts} preamble symbols. A plurality of fragments obtained by dividing the N_{cts} preamble symbols are Cts(0) to Cts(N_{seg}-1), Cts(N_{seg}) to Cts(2*N_{seg}-1), ..., and Cts((M_{seg}-1)*N_{seg}) to Cts(N_{cts}-1).

It is assumed that lengths of the plurality of fragments are equal, and duration of each fragment may be represented as: T_{seg}=N_{seg}*T_{sym}. T_{sym} represents duration (for example, 1 µs) of a single preamble symbol, and N_{seg} represents a quantity of preamble symbols in one fragment. Therefore, Tseg represents duration of one fragment. T_{Gap} in FIG. 11 represents duration of a gap.

For example, it is assumed that preamble symbols included in a CTS field are Cts(0) to Cts(Ncts-1), and N_{cts}=1024. To be specific, the CTS field has 1024 preamble symbols. If one fragment includes 32 preamble symbols, the 1024 preamble symbols are divided into 1024/32=32 fragments for sending. The 0^{th} to 31^{st} preamble symbols are the 1st fragment, and the 32^{nd} to 63^{rd} preamble symbols are the 2^{nd} fragment. Similarly, other fragments may be sent in sequence.

In this way, when the ultra-wideband frame includes the synchronization field and the CTS field, and the CTS field includes a plurality of encrypted gaps, the CIR training field in this application sends a signal only at time of a CTS fragment, and does not send a signal at the gaps between the fragments. Therefore, a signal duty cycle of the entire ultra-wideband frame can be reduced, and transmit power of the ranging transmitting end can be increased.

It may be understood that, to implement the foregoing functions, the communication device includes a corresponding hardware and/or software module for performing each function. With reference to the example algorithm steps described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the communication device may be divided into functional modules based on the foregoing method examples. For example, each functional module may be obtained through division based on each corresponding function, or two or more functions may be integrated into one processing module. The integrated module may be implemented in a form of hardware. It should be noted that, in this embodiment, division into the modules is an example, is merely logical function division, and may be other division during actual implementation.

When each functional module is obtained through division based on each corresponding function, FIG. 12 is a possible schematic composition diagram of a communication device 120 in the foregoing embodiments. As shown in FIG. 12, the communication device 120 may include an obtaining unit 1201, a transceiver unit 1202, and a ranging unit 1203.

The obtaining unit 1201 may be configured to support the communication device 120 in performing the foregoing step 401, step 601, step 602, and the like, and/or another process of the technology described in this specification.

The transceiver unit 1202 may be configured to support the communication device 120 in performing the foregoing step 402, step 603, step 604, step 606, and the like, and/or another process of the technology described in this specification.

The ranging unit 1203 may be configured to support the communication device 120 in performing the foregoing step 605 and the like, and/or another process of the technology described in this specification.

It should be noted that all related content of the steps in the foregoing method embodiments may be cited in function description of corresponding functional modules. Details are not described herein again.

The communication device 120 provided in this embodiment is configured to perform the foregoing ultra-wideband frame sending method. Therefore, an effect same as the foregoing implementation methods can be achieved.

When an integrated unit is used, the communication device 120 may include a processing module, a storage module, and a communication module. The processing module may be configured to control and manage an action of the communication device 120. For example, the processing module may be configured to support the communication device 120 in performing the steps performed by the obtaining unit 1201 and the ranging unit 1203. The storage module may be configured to support the communication device 120 in storing program code, data, and the like. The communication module may be configured to support communication between the communication device 120 and another device. For example, when the communication device 120 is a ranging sending device, the communication module is configured to support communication between the ranging sending device and a ranging receiving device.

The processing module may be a processor or a controller. The processing module may implement or perform various example logical blocks, modules, and circuits described with reference to content disclosed in this application. Alternatively, the processor may be a combination for implementing a computing function, for example, a combination of one or more microprocessors, a combination of digital signal processing (digital signal processing, DSP) and a microprocessor, or the like. The storage module may be a memory. The communication module may be specifically a device, for example, a radio frequency circuit, a Bluetooth chip, a Wi-Fi chip, or the like that interacts with another electronic device.

In an embodiment, when the processing module is a processor, the storage module is a memory, and the communication module is a transceiver, the communication device 120 in this embodiment may be a ranging device 130 having the structure shown in FIG. 13.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, an electronic device is enabled to perform the foregoing related method steps, to implement the ultra-wideband frame sending methods in the foregoing embodiments.

Embodiments of this application further provide a computer storage medium. The computer storage medium stores computer instructions. When the computer instructions are run on an electronic device, the electronic device is enabled to perform the foregoing related method steps, to implement the ultra-wideband frame sending methods in the foregoing embodiments.

Embodiments of this application further provide a computer program product. When the computer program product runs on a computer, the computer is enabled to perform the foregoing related steps, to implement the ultra-wideband frame sending methods performed by the electronic device in the foregoing embodiments.

In addition, embodiments of this application further provide an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the ultra-wideband frame sending methods performed by the communication device in the foregoing method embodiments.

The communication device, the computer storage medium, the computer program product, or the chip provided in embodiments are all configured to perform the corresponding methods provided above. Therefore, for beneficial effects that can be achieved by the communication device, the computer storage medium, the computer program product, and the chip, refer to the beneficial effects in the corresponding methods provided above. Details are not described herein again.

Another embodiment of this application provides a system. The system may include the foregoing sending device and receiving device, and may be configured to implement the foregoing ultra-wideband frame sending method.

The foregoing descriptions about implementations allow a person skilled in the art to understand that, for the purpose of convenient and brief description, division into the foregoing functional modules is used as an example for description. During actual application, the foregoing functions can be allocated to different functional modules and implemented based on requirements. In other words, an inner structure of an apparatus is divided into different functional modules to implement all or some of the functions described above.

In several embodiments provided in this application, it should be understood that the disclosed apparatus and methods may be implemented in another manner. For example, the described apparatus embodiments are merely examples. For example, division into the modules or units is merely logical function division. There may be another division manner during actual implementation. For example, a plurality of units or components may be combined or may be integrated into another apparatus, or some features may be ignored or not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An ultra-wideband frame sending method, comprising:
obtaining, by a communication device, key information of an ultra-wideband frame, wherein the ultra-wideband frame comprises a plurality of data fragments; and
sending, by the communication device, the plurality of data fragments based on one or more gaps between the plurality of data fragments, or receiving, by the communication device, the plurality of data fragments based on one or more gaps between the plurality of data fragments, wherein the gaps between the plurality of data fragments are determined based on the key information.

2. The method according to claim 1, wherein the key information is a symmetric key between a communication device sending the ultra-wideband frame and a communication device receiving the ultra-wideband frame; and
before the sending, by the communication device, the plurality of data fragments based on one or more gaps between the plurality of data fragments, or receiving the plurality of data fragments based on one or more gaps between the plurality of data fragments, the method further comprises:
generating, by the communication device, a random number based on the symmetric key, and determining the gaps between the plurality of data fragments based on the random number.

3. The method according to claim 2, wherein
the gaps between the plurality of data fragments are the same, wherein
a value of the gaps between the plurality of data fragments is the random number; or
a value of the gaps between the plurality of data fragments is obtained through calculation performed based on the random number.

4. The method according to claim 2, wherein
the gaps between the plurality of data fragments are not exactly the same; and
the generating, by the communication device, a random number based on the key information, and determining the gaps between the plurality of data fragments based on the random number comprises:
generating, by the communication device, a plurality of random numbers based on the symmetric key, and setting the plurality of random numbers as the gaps between the plurality of data fragments; or
generating, by the communication device, a plurality of random numbers based on the symmetric key, and performing calculation based on the plurality of random numbers, to obtain the gaps between the plurality of data fragments.

5. The method according to claim 2, wherein
the gaps between the plurality of data fragments are not exactly the same; and
the generating, by the communication device, a random number based on the symmetric key, and determining the gaps between the plurality of data fragments based on the random number comprises:
generating, by the communication device, a first random number based on the symmetric key, wherein the first random number is one of a plurality of random numbers, and the plurality of random numbers correspond to a plurality of gap modes; and
obtaining, by the communication device, a first gap mode corresponding to the first random number, wherein the first gap mode indicates the gaps between the plurality of data fragments.

6. A communication device, wherein the communication device comprises:
an obtaining unit, configured to obtain key information of an ultra-wideband frame, wherein the ultra-wideband frame comprises a plurality of data fragments; and
a transceiver unit, configured to send the plurality of data fragments based on one or more gaps between the plurality of data fragments, or receive the plurality of data fragments based on one or more gaps between the plurality of data fragments, wherein the gaps between the plurality of data fragments are determined based on the key information.

7. The communication device according to claim 6, wherein the key information is a symmetric key between a communication device sending the ultra-wideband frame and a communication device receiving the ultra-wideband frame; and
the obtaining unit is further configured to:
generate a random number based on the symmetric key, and determine the gaps between the plurality of data fragments based on the random number.

8. The communication device according to claim 7, wherein
the gaps between the plurality of data fragments are the same, wherein
a value of the gaps between the plurality of data fragments is the random number; or
a value of the gaps between the plurality of data fragments is obtained through calculation performed based on the random number.

9. The communication device according to claim 7, wherein
the gaps between the plurality of data fragments are not exactly the same; and
the obtaining unit is configured to:
generate a plurality of random numbers based on the symmetric key, and set the plurality of random numbers as the gaps between the plurality of data fragments; or
generate a plurality of random numbers based on the symmetric key, and perform calculation based on the plurality of random numbers, to obtain the gaps between the plurality of data fragments.

10. The communication device according to claim 7, wherein
the gaps between the plurality of data fragments are not exactly the same; and
the obtaining unit is configured to:
generate a first random number based on the symmetric key, wherein the first random number is one of a plurality of random numbers, and the plurality of random numbers correspond to a plurality of gap modes; and
obtain, by the communication device, a first gap mode corresponding to the first random number, wherein the first gap mode indicates the gaps between the plurality of data fragments.

11. A computer-readable storage medium, comprising computer instructions, wherein when the computer instructions are run on an electronic device, the electronic device is enabled to perform the method according to any one of claims 1 to 5.
